Europäisches Patentamt

European Patent Office

Office européen des brevets

(11) Veröffentlichungsnummer: **0 174 433**
**A2**

(12) # EUROPÄISCHE PATENTANMELDUNG

(21) Anmeldenummer: **85105560.8**

(51) Int. Cl.⁴: **H 04 N 9/64**

(22) Anmeldetag: **07.05.85**

(30) Priorität **14.09.84 DE 3433769**

(43) Veröffentlichungstag der Anmeldung:
**19.03.86 Patentblatt 86/12**

(84) Benannte Vertragsstaaten:
**DE FR GB IT**

(71) Anmelder: **GRUNDIG E.M.V. Elektro-Mechanische
Versuchsanstalt Max Grundig holländ. Stiftung & Co.
KG.
Kurgartenstrasse 37
D-8510 Fürth(DE)**

(72) Erfinder: **Knauf, Burkhard, Ing.-grad.
Steinfeldweg 3b
D-8510 Fürth/Bayern(DE)**

(54) Verfahren und Anordnung zur Messung der Kathodenstrahlströme in Fernsehempfängern.

(57) Zur Kontrastregelung in Fernsehempfängern ist es nötig, die in der Bildröhre flirßenden Kathodenstrahlströme zu messen. Bei den bisher bekannten Meßverfahren treten Meßfehler auf, die auf kapazitive Lasten in der Endstufe, in den Zuleitungen zur Bildröhre und in der Bildröhre selbst zurückzuführen sind. Mit der vorliegenden Erfindung werden diese Meßfehler dadurch stark reduziert, daß der Strahlstrom und die durch kapazitive Lasten verursachten positiven und negativen Halbwellen des zur Steuerelektrode der Bildröhre fließenden Wechselstromanteils aufsummiert werden, daß das Summensignal tiefpaßgefiltert und daß die dem Kathodenstrahlstrom proportionale Meßspannung am Ausgang des Tiefpaßfilters abgegriffen wird.

FIG. 2

- 1 -

# VERFAHREN UND ANORDNUNG ZUR MESSUNG DER KATHODENSTRAHLSTRÖME IN FERNSEHEMPFÄNGERN

## BESCHREIBUNG

Die Erfindung bezieht sich auf ein Verfahren zur Messung der in der Bildröhre eines Fernsehempfängers fließenden Kathodenstrahlströme, bei dem der Strahlstrom für jedes System (R, G, B) individuell unter Verwendung eines Meßtransistors und eines Meßwiderstandes gemessen wird. Ferner betrifft die Erfindung eine Anordnung zur Durchführung dieses Verfahrens.

Zur Regelung des Kontrastes in Fernsehempfängern und Datenmonitoren ist es notwendig, eine zum Augenblickswert des Strahlstroms proportionale Größe zu erhalten. Diese Größe wird beim Überschreiten eines vorgegebenen Schwellenwertes zur Steuerung der Kontrastregelschaltung verwendet.

Zur Messung der Strahlströme schaltet man zwischen die Videoendstufen und die Bildröhrenkathoden Meßtransistoren, deren Kollektorströme bei genügend großer Stromverstärkung der Meßtransitoren nahezu identisch sind mit den zu messenden Bildröhrenkathodenströmen. Diese Ströme fließen durch Meßwiderstände, die zwischen die Kollektoren der Meßtransistoren und
Masse geschaltet sind. Die an den Meßwiderständen abfallenden
Spannungen werden als Maß für die Bildröhrenkathodenströme
verwendet und der Schaltung zur Regelung des Kontrastes zugeführt.

Alternativ dazu kann man ein Maß für die Strahlströme auch aus
der Summe der Meßtransistor-Kollektorströme erhalten, die mit
dem Augenblickswert des Gesamtstrahlstroms nahezu identisch ist.

Durch die Lastkapazitäten im Aufbau der drei Endstufen, der
Zuleitungen zu den Röhren und durch die bildröhreninternen
Kapazitäten ist die Last der Endstufen nicht reell. Das hat
zur Folge, daß die im Kollektor des jeweiligen Meßtransistors
auftretenden, durch die Lastkapazitäten bedingten Steuerstromanteile mit der Frequenz zunehmen und somit die Messung verfälschen. In der Praxis bedeutet dies, daß der Kontrast bei
höheren Signalfrequenzen stärker zurückgenommen wird als dies
eigentlich nötig ist.

Der Kathodenstrom $I_K$ ist primär ein positiver pulsierender
Gleichstrom. Infolge der Lastkapazitäten ergeben sich jedoch
auch Wechselstromanteile, die die Messung verfälschen.

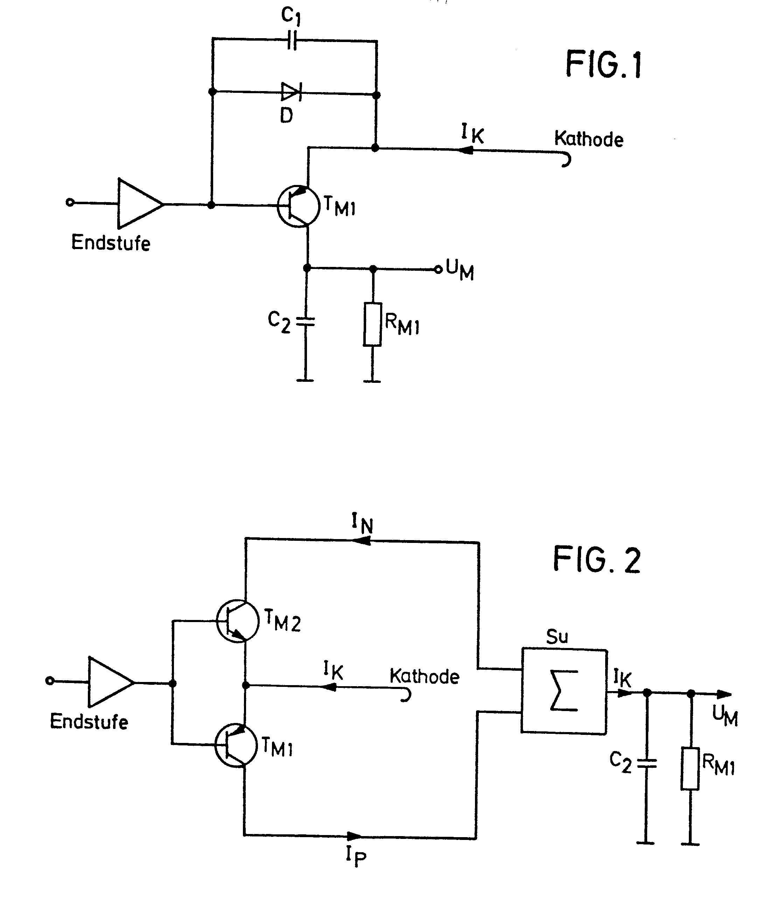

Es sind bereits Schaltungen bekannt, bei denen der Einfluß der
kapazitiven Steuerstromanteile bei der Messung der Kathodenstrahlströme verringert ist. Eine solche Schaltung zeigt Fig.1.
Die in positiver $I_K$-Richtung fließenden Stromanteile werden vom Meßtransistor $T_{M1}$ übernommen, während die in negativer $I_K$-Richtung fließenden Stromanteile über die parallel zur Basis-Emitter-Strecke des Meßtransistors $T_{M1}$ geschaltete Diode D von der Endstufe übernommen werden. Ferner läßt der parallel zur Diode D geschaltete Kondensator $C_1$ die kapazitiven Steuerstromanteile weitgehend direkt zur Endstufe durch. Somit werden die in negativer $I_K$-Richtung fließenden Stromanteile und bis zu einem gewissen Grad auch die kapazitiven Steuerstromanteile von der Messung eliminiert. Der parallel zum Meßwiderstand $R_{M1}$ liegende Kondensator $C_2$ hat die Aufgabe, die durch den Transistor $T_{M1}$ gelangenden Wechselstromanteile zu sieben, d.h. das Meßsignal zu glätten.

Die Dimensionierung der Kapazitäten von $C_1$ und $C_2$ erfolgt derart, daß ein Kompromiß zwischen möglichst frequenzunabhängiger Messung des Strahlstroms und kurzer Ansprechzeit der Regelung getroffen wird.

Zur Verbesserung des Regelverhaltens der in Fig. 1 beschriebenen Schaltung bei Datenbetrieb wurde in der Patentanmeldung P 33 30 729.6 vom 26.08.1982 vorgeschlagen, die massefernen Anschlüsse der Meßwiderstände durch Kondensatoren und dazu in Reihe geschaltete Widerstände miteinander zu verbinden. Damit kann beispielsweise der maximal zulässige Spitzenstrahlstrom beim Auftreten eines Spitzlichtes in nur einem der drei Systeme bei geeigneter Dimensionierung der Widerstände in einem weiten Bereich eingestellt werden.

Mit den bekannten Schaltungen ist es aber nur bis zu einem bestimmten Grad möglich, den Einfluß der kapazitiven Steuerstromanteile bei der Messung der Strahlströme geringzuhalten. Dabei treten Probleme bei der Dimensionierung der Bauelemente auf, da eine Dimensionierung derart, daß eine kurze Ansprechzeit der Regelung erreicht wird, stets Einbußen im Frequenzverhalten der Schaltung mit sich bringt, und umgekehrt. Ferner gelangt bei der herkömmlichen Meßmethode auch ein fehlerhafter Gleichanteil durch den Meßtransistor an den Meßwiderstand. In der Praxis wird deshalb oft der Kontrast stärker reduziert als dies bei einem korrekt erfaßten Strahlstrom nötig wäre. Ein weiterer Nachteil der bekannten Schaltung besteht darin, daß der Kompensationskondensator $C_1$ sich bei Weiß-Schwarz-Sprüngen auf die Durchlaßspannung der Diode D umlädt und in Sperrpunktnähe der Röhrensysteme über die geringen Strahlströme den Meßtransistor $T_{M1}$ nur langsam in den leitenden Zustand überführt, was Bildfehler zur Folge hat.

Der vorliegenden Erfindung liegt die Aufgabe zugrunde, ein einfaches Verfahren zur Messung der Kathodenstrahlströme in Fernsehempfängern zu schaffen, welches die vorgenannten Nachteile nicht aufweist und weitgehend unempfindlich ist gegen Änderungen im Verhältnis von Strahlstrom zu kapazitiven Steuerstromanteilen.

Diese Aufgabe wird gemäß der Erfindung durch die im kennzeichnenden Teil des Anspruchs 1 angegebenen Maßnahmen gelöst. Eine vorteilhafte Weiterbildung ist aus dem Anspruch 2 ersichtlich. Im Anspruch 3 ist eine Anordnung zur Durchführung des im Anspruch 1 angegebenen Verfahren beschrieben. Die Ansprüche 4 bis 6 beinhalten vorteilhafte Weiterbildungen der im Anspruch 3 genannten Anordnung.

Die Vorteile der Erfindung liegen darin, daß es einfach und preiswert möglich wird, bei der Strahlstrommessung den Einfluß kapazitiver Steuerstromanteile minimal zu halten. Das Verfahren nach der vorliegenden Erfindung zeichnet sich ferner dadurch aus, daß Änderungen im Verhältnis von Strahlstrom zu kapazitiven Steuerstromanteilen bei der Messung nahezu keine Rolle spielen, da durch die Summierung der beiden entgegengesetzt gerichteten Halbwellen der gemessene Strahlstrommittelwert nicht von den kapazitiven Anteilen des zur Steuerelektrode der Bildröhre fließenden Stromes abhängt. Folglich muß mittels des Tiefpaßfilters lediglich der dem Strahlstrom überlagerte Wechselstromanteil beseitigt werden. Weitere Vorteile und Eigenschaften der Erfindung werden im Zusammenhang mit der Beschreibung der Figuren 2 bis 5 erläutert.

Es zeigen:

Figur 2: ein Prinzipschaltbild für die vorliegende Erfindung,

Figur 3: ein Beispiel für Spannungs und Stromverläufe in der Prinzipschaltung von Fig. 2,

Figur 4: ein einfaches detailliertes Ausführungsbeispiel für die vorliegende Erfindung und

Figur 5: ein Beispiel für eine vorteilhafte
Weiterbildung der Erfindung.

Anhand des Prinzipschaltbildes von Fig. 2 wird im folgenden die vorliegende Erfindung für eines der drei Systeme (R, G, B) näher erläutert. Zwischen die Endstufe des Systems und die zugehörige Kathode ist der pnp-Meßtransistor $T_{M1}$ derart geschaltet, daß seine Basis an den Ausgang der Endstufe, sein Emitter an die Kathode der Bildröhre und sein Kollektor an den ersten Eingang einer Summierschaltung Su angeschlossen ist. Ferner ist parallel zur Basis-Emitter-Strecke des pnp-Meßtransistors $T_{M1}$ die Basis-Emitter-Strecke eines zu $T_{M1}$ komplementären npn-Meßtransistors $T_{M2}$ geschaltet, dessen Basis ebenfalls an den Ausgang der Endstufe, dessen Emitter ebenfalls an die Kathode der Bildröhre und damit auch an den Emitter des Transistors $T_{M1}$, und dessen Kollektor an den zweiten Eingang der Summierschaltung Su angeschlossen ist. Am Ausgang der Summierschaltung Su liegt ein Tiefpaßfilter, bestehend aus einem Meßwiderstand $R_{M1}$ und einem Siebkondensator $C_2$.

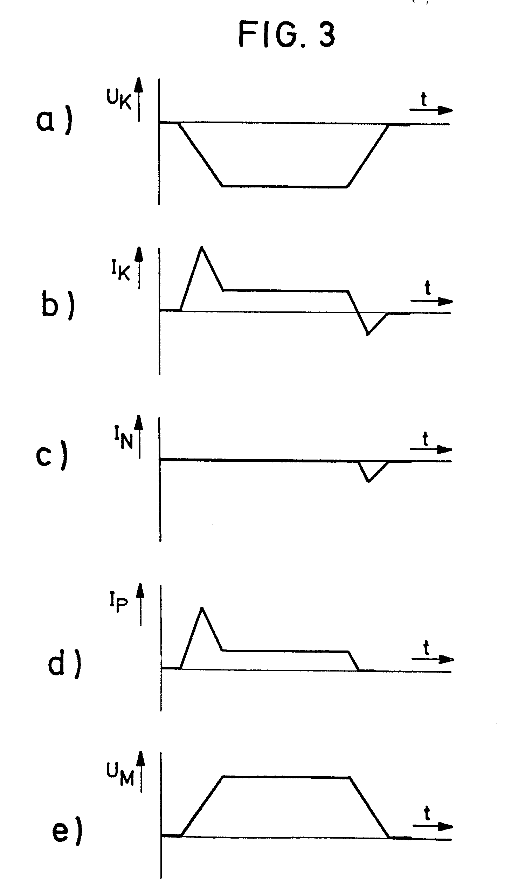

Ein Beispiel für Spannungs- und Stromverläufe im Prinzipschaltbild von Fig. 2 zeigen die Figuren 3a bis 3e. Fig. 3a zeigt ein Beispiel für den Spannungsverlauf an der Kathode und Fig. 3b den zugehörigen Verlauf des Kathodenstroms $I_K$. Der negative Anteil $I_N$ (siehe Fig. 3c) des Kathodenstroms $I_K$ fließt über die Emitter-Kollektorstrecke des npn-Meßtransistors $T_{M2}$ und von dort in den einen Eingang des Summierers Su. Der positive Anteil $I_p$ (siehe Fig. 3d) des Kathodenstroms $I_K$ gelangt über die Emitter-Kollektorstrecke des pnp-Meßtransistors $T_{M1}$ an den anderen Eingang des Summierers Su. Am Ausgang des Summierers Su erhält man somit wieder eine Spannung, die dem Originalverlauf des Kathodenstroms $I_K$ einschließlich der störenden Wechselstromanteile entspricht. Diese Wechselstromanteile, die die Messung verfälschen würden, können einfach durch den Tiefpaß $R_{M1}C_2$ beseitigt werden. Am Ausgang des Tiefpasses $R_{M1}C_2$ kann die dem Kathodenstrom proportionale Meßspannung $U_M$ abgegriffen und der Kontrastregelschaltung zugeführt werden.

Die in Fig. 2 beschriebene Meßschaltung für den Kathodenstrahlstrom ist weitgehend unempfindlich gegen Änderungen im Verhältnis von Strahlstrommittelwert zu (ungewünschten, die Messung verfälschenden) Wechselstromanteilen. Die Dimensionierung des Tiefpasses $R_{M1}C_2$ zur Beseitigung der störenden Wirkung der kapazitiven Steuerstromanteile sollte so erfolgen, daß seine obere Grenzfrequenz unterhalb der Frequenz liegt, bei der die kapazitiven Steuerstromanteile merklichen Einfluß auf die Messung ausüben.

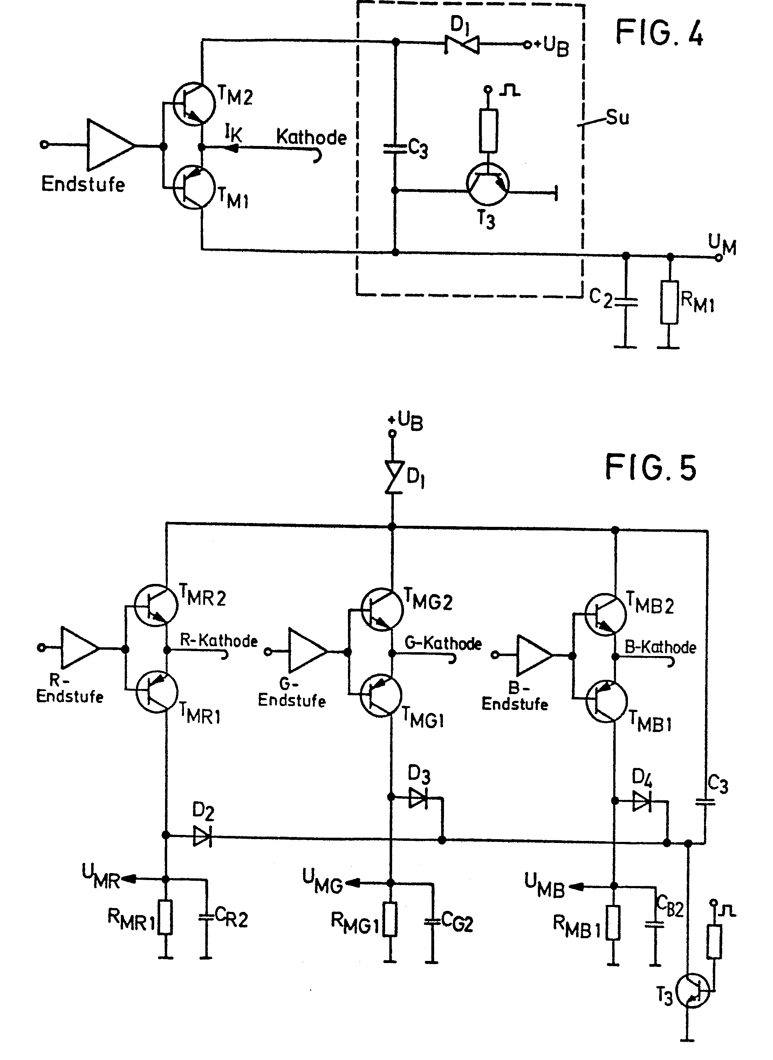

Die Fig. 4 zeigt ein einfaches detailliertes Ausführungsbeispiel für die vorliegende Erfindung für eines der drei Systeme (R, G oder B). Zwischen die Endstufe des Systems und die zugehörige Kathode sind auf die bereits im Zusammenhang mit der Fig. 2 beschriebenen Weise zwei zueinander komplementäre Meßtransistoren $T_{M1}$ und $T_{M2}$ geschaltet, die die positiven bzw. negativen Halbwellen des zur Steuerelektrode der Bildröhre fließenden Wechselstromanteils übernehmen und an die Eingänge des Summierers Su führen. Die Summierung von positiven und negativen Halbwellen erfolgt über einen Kondensator $C_3$, dessen einer Anschluß mit dem Kollektor des npn-Meßtransistors $T_{M2}$ und dessen anderer Anschluß mit dem Kollektor des pnp-Meßtransistors $T_{M1}$ verbunden ist. An den Kollektor des npn-Meßtransistors $T_{M2}$ ist ferner die Kathode einer Diode D - mit Rücksicht auf die Funktion der Klemmschaltung vorzugweise eine Zenerdiode - angeschlossen, deren Anode an eine Spannungsquelle $+U_B$ geschaltet ist. Der Kollektor des pnp-Meßtransistors $T_{M1}$ ist mit dem Kollektor eines Transistors $T_3$ verbunden, dessen Basis mit zeilenfrequenten Impulsen angesteuert wird, und dessen Emitter an Masse liegt. Ferner ist der Kollektor des pnp-Meßtransistors $T_{M1}$ noch mit einem Tiefpaß, bestehend aus dem Meßwiderstand $R_{M1}$ und dem Siebkondensator $C_2$, verbunden, an dessen Ausgang die Meßspannung abgenommen werden kann.

Die Diode $D_1$ hat im wesentlichen zwei Funktionen: einmal dient sie als Entkoppeldiode, die sicherstellt, daß der durch den Meßtransistor $T_{M2}$ fließende Strom vollständig vom Kondensator $C_3$ übernommen wird. Ferner dient die Diode $D_1$ in Zusammenarbeit mit dem horizontalfrequent durchlässig gesteuerten Transistor $T_3$ zur zeilenfrequenten Klemmung des Gleichspannungspegels am Kondensator $C_3$ auf einen von der Spannungsquelle $+U_B$ vorgegebenen Wert. Diese Klemmung des Gleichspannungspegels am Kondensator $C_3$ ist nötig, weil die bei den Summationsvorgängen stattfindenden Umladungen den Gleichspannungspegel an $C_3$ so weit reduzieren, daß der Summierer nicht mehr arbeitet. Es empfiehlt sich eine zeilenfrequente Klemmung, damit $C_3$ relativ klein dimensioniert werden kann.

Am Ausgang des Summierers Su erhält man wieder eine Spannung, die dem originalen Kathodenstrahlstrom einschließlich der störenden Wechselstromanteile, die insbesondere bei Datenbetrieb dem Strahlstrom überlagert sind (siehe auch P 33 30 729.6), entspricht. Diese Wechselstromanteile können einfach durch den Tiefpaß $R_{11}C_2$ beseitigt werden, so daß am Ausgang des Tiefpasses die dem Strahlstrom proportionale Meßspannung abgegriffen werden kann.

Eine vorteilhafte Weiterbildung des Ausführungsbeispiels nach Fig. 4 zeigt die Fig. 5. Bei der in Fig. 5 gezeigten Schaltung ist die Kathode der Diode $D_1$, deren Anode an die Spannungsquelle $+U_B$ angeschlossen ist, gleichzeitig mit den Kollektoren der npn-Meßtransistoren $T_{MR2}$ (für das R-System), $T_{MG2}$ (für das G-System) und $T_{MB2}$ (für das B-System) verbunden. Weiterhin sind die massefernen Anschlüsse der Meßwiderstände $R_{MR1}$, $R_{MG1}$ und $R_{MB1}$ über Entkopplungsdioden $D_2$, $D_3$ und $D_4$ mit dem Kondensator $C_3$ und dem Kollektor des Klemmtransistors $T_3$ verbunden. Bei dieser Schaltung wird die Summation von negativer und positiver Halbwelle des störenden Wechselstromanteils immer nur für das System mit dem höchsten Strahlstrom durchgeführt.

VERFAHREN UND ANORDNUNG ZUR MESSUNG DER KATHODENSTRAHLSTRÖME
IN FERNSEHEMPFÄNGERN


PATENTANSPRÜCHE


1.    Verfahren zur Messung der in der Bildröhre eines
Fernsehempfängers fließenden Kathodenstrahlströme, bei dem
der Strahlstrom für jedes System (R, G, B) individuell unter
Verwendung eines Meßtransistors und eines Meßwiderstandes
gemessen wird,  d a d u r c h   g e k e n n z e i c h n e t ,
daß der Strahlstrom und die durch kapazitive Lasten verursachten positiven und negativen Halbwellen des zur Steuerelektrode
der Bildröhre fließenden Wechselstromanteils aufsummiert werden, daß das Summensignal tiefpaßgefiltert und daß die dem
Kathodenstrahlstrom proportionale Meßspannung am Ausgang des
Tiefpaßfilters abgegriffen wird.


2.    Verfahren nach Anspruch 1,  d a d u r c h   g e -
k e n n z e i c h n e t ,   daß die Summation von Strahlstrom
und positiven und negativen Halbwellen des zur Steuerelektrode der Bildröhre fließenden Wechselstromanteils unter Verwendung einer für alle drei Systeme gemeinsamen Hilfsschaltung und geeigneter Entkopplungsnetzwerke erfolgt.

3.    Anordnung zur Durchführung des Verfahrens nach Anspruch 1 oder 2, bei der zur Messung der in der Bildröhre eines Fernsehempfängers fließenden Kathodenstrahlströme jedes System (R, G, B) einen zwischen die Endstufe und die Kathode geschalteten Meßtransistor enthält, dessen Kollektorstrom an einem Meßwiderstand einen zum Kathodenstrahlstrom proportionalen Spannungsabfall hervorruft, und bei der parallel zum Meßwiderstand ein Siebkondensator geschaltet ist, d a d u r c h g e k e n n z e i c h n e t , daß parallel zur Basis-Emitter-Strecke des Meßtransistors $T_{M1}$ die Basis-Emitter-Strecke eines zu $T_{M1}$ komplementären zweiten Transistors $T_{M2}$ geschaltet ist, daß die Kollektorströme der beiden Transistoren in einem Summierer Su aufsummiert werden, und daß an den Ausgang des Summierers ein Tiefpaßfilter, bestehend aus dem Meßwiderstand $R_{M1}$ und dem Siebkondensator $C_2$, geschaltet ist.

4.    Anordnung nach Anspruch 3, d a d u r c h g e - k e n n z e i c h n e t , daß die Summierung der Kollektorströme der beiden Transistoren mittels eines Kondensators $C_3$ erfolgt, und daß eine Klemmstufe $D_1$, $T_3$ zur zeilenfrequenten Klemmung des Gleichspannungspegels am Kondensator $C_3$ auf einen von einer Spannungsquelle $+U_B$ vorgegebenen Wert vorgesehen ist.

5. Anordnung nach Anspruch 3 oder 4, d a d u r c h g e k e n n z e i c h n e t , daß für alle drei Systeme (R, G, B) ein gemeinsamer Summierer Su vorgesehen ist, und daß zwischen die drei Systeme geeignete Entkopplungsnetzwerke $D_2$, $D_3$, $D_4$ geschaltet sind.

- 4 -     Beschreibung:

FIG.1

FIG. 2

# FIG. 3

a) $U_K$

b) $I_K$

c) $I_N$

d) $I_P$

e) $U_M$

Reg. 1959
0174433

FIG. 4

FIG. 5